# EUROPEAN PATENT APPLICATION

(11) **EP 3 796 242 A1**
(43) Date of publication of application: **24.03.2021**
(21) Application number: 19197864.2
(22) Date of filing: 17.09.2019
(51) Int. Cl.: G06Q 20/04, G06Q 20/20

(54) **DIGITAL POS RECEIPT DISTRIBUTION**

(71) Applicant: Mastercard International Incorporated, New York, NY 10577 (US)
(72) Inventor: Keegan, Marie, 1541 Sint-Pieters-Kapelle (BE); Kommanapalli, Kalyan, 1640 Rhode-Saint-Genese (BE); Wardziak, Tomasz, 96-300 Zyrardów (PL); Bussolotti, Luca, 00043 Roma (IT); Sigmund, Matthias Wolfgang, 51061 Köln (DE)
(74) Representative: Barker Brettell LLP

(57) **Abstract**

There is provided a computer implemented method of providing a transaction receipt. The method comprises, at an issuer (160): receiving a transaction request (201) from a card holder originating from a merchant payment device; authorising the transaction (206); setting an ePOS enable flag (207) that indicates whether electronic POS receipting is enabled for the card holder's account at the issuer (160); storing an electronic POS receipt at the issuer (160) if the ePOS enable flag indicates that ePOS is enabled; and communicating the authorised transaction with the ePOS enable flag (208) to a payment network (150) for routing to the merchant payment device.

## Description

### FIELD OF INVENTION

The present disclosure relates to a method and system for providing electronic point of sale (POS) receipts.

### BACKGROUND

When a customer makes a purchase using a payment card, using a point of sale (POS) terminal, they will typically receive a printed POS receipt from the terminal. It is typically a requirement that the customer be provided with a receipt is automatically provided to the customer by a POS terminal. Payment networks (e.g. Mastercard) may provide rules about what information must be provided by a merchant in a POS receipt.

Often, the POS receipt is provided on two separate pieces of paper: one will itemise the goods and services that the transaction relates to, and the other will provide the transaction information that is required for the transaction by the payment network (such as the card number, authorisation code, etc). The former may be referred to as the "merchant receipt", and the latter the "card receipt". The card receipt typically includes only the information that is transmitted through the payment network in order to enable the transaction. Under some circumstances, a single POS receipt may be provided that combines all the information relating to the transaction.

Currently, customers typically discard card receipts, since it is perceived that the valuable receipt is the merchant receipt (which is generally required by a merchant in order to process a refund). Nevertheless, the information on the card receipt is required for a chargeback (when a customer wishes to reverse a card payment for breach of contract).

In some circumstances a merchant may make arrangements to provide an electronic receipt to the customer, for example by email. It may be complex and time consuming to implement an electronic receipting system that meets the requirements of the payment network. For example, an existing POS terminal may need to be replaced by a more sophisticated device that is capable of providing electronic receipts.

It is an object of the present disclosure to overcome or ameliorate at least some of the problems identified above.

### SUMMARY

According to the invention, there is provided a computer implemented method of providing a transaction receipt, comprising, at an issuer:
receiving a transaction request from a card holder originating from a merchant payment terminal;
authorising the transaction;
setting an ePOS enable flag that indicates whether electronic POS receipting is enabled for the card holder's account at the issuer;
storing an electronic POS receipt at the issuer if the ePOS enable flag indicates that ePOS is enabled; and
communicating the authorised transaction with the ePOS enable flag to a payment network for routing to the payment terminal.

The method may further comprise, at a point of sale terminal of a merchant:
receiving an authorised transaction with an ePOS enable flag;
determining whether the ePOS enable flag indicates that electronic receipting is enabled, or is not enabled;
in response to determining that the ePOS enable flag indicates that electronic POS receipting is not enabled,
   providing (e.g. printing) a POS receipt,
or, in response to determining that the ePOS enable flag indicates that electronic POS receipting is enabled,
   providing an option not to receive a receipt from the merchant and/or not providing (e.g. printing) a POS receipt at the merchant.

The method may further comprise:
providing a user interface for the card holder to obtain electronic POS receipts from the issuer for their transactions.

The user interface may comprise a control for selecting an electronic POS receipt and initiating a chargeback therefrom.

The user interface may comprise an application for a mobile device or a web interface.

The user interface may require the card holder to authenticate themselves using multi-factor authentication.

Authentication using multi-factor authentication comprises providing a time based one-time password.

According to a second aspect, there is provided a computer implemented method of operating a point of sale device (e.g. a point of sale terminal or point of sale processor), comprising, at the point of sale terminal:
receiving from an issuer an authorised transaction with an ePOS enable flag from an issuer;
determining whether the ePOS enable flag indicates that electronic receipting is enabled, or is not enabled;
in response to determining that the ePOS enable flag indicates that electronic POS receipting is not enabled,
   providing (e.g. printing) a POS receipt,
or, in response to determining that the ePOS enable flag indicates that electronic POS receipting is enabled,
   providing an option not to receive a receipt from the merchant and/or not providing (e.g. printing) a POS receipt.

According to a third aspect, there is provided a computer implemented method of securely initiating a chargeback, comprising;
obtaining an electronic point of sale receipt for a transaction from an issuer;
generating a chargeback request for the transaction from the issuer using the electronic point of sale receipt;
wherein the chargeback request is automatically populated with data by the issuer using data from the electronic point of sale receipt.

Obtaining the electronic point of sale receipt may comprise reviewing a list of transactions via a user interface provided by the issuer, and selecting a transaction from the list.

The method may further comprise providing reasons for the chargeback to the issuer

According to a fourth aspect, there is provided an electronic point of sale device (e.g. terminal or processor) for electronic transfer of funds from a card holder account at an issuer to a merchant account at an acquirer via a payment network, wherein the electronic point of sale terminal is configured to:
receive an authorised transaction with an ePOS enable flag;
determining whether the ePOS enable flag indicates that electronic receipting is enabled, or is not enabled;
in response to determining that the ePOS enable flag indicates that electronic POS receipting is not enabled,
   providing (e.g. printing) a POS receipt,
or, in response to determining that the ePOS enable flag indicates that electronic POS receipting is enabled,
   providing an option not to receive a receipt from the merchant and/or not providing (e.g. printing) a POS receipt at the merchant.

The electronic point of sale terminal may further comprise a card reader for reading an electronic payment card that identifies the card holder account.

The electronic point of sale terminal may comprise a near field communication reader for reading an electronic payment device that identified the card holder account.

According to a fifth aspect, there is provided a computing system configured to:
receive a transaction request from a card holder originating from a merchant payment device (e.g. terminal or processor);
authorise the transaction;
set an ePOS enable flag that indicates whether electronic POS receipting is enabled for the card holder's account at the issuer;
store an electronic POS receipt at the issuer if the ePOS enable flag indicates that ePOS is enabled; and
communicate the authorised transaction with the ePOS enable flag to a payment network for routing to the payment terminal.

Features of each aspect may be combined with those of other aspects. For example, the method of initiating a chargeback in accordance with the third aspect may include the method of providing a transaction receipt in accordance with the first aspect.

According to another aspect, there is provided a non-transitory, machine readable medium for configuring a computer system to implement the method according to the any of the aspects above, including their optional features.

### DETAILED DESCRIPTION

Example embodiments will be described, with reference to the accompanying drawings, in which:
Figure 1 is a schematic of a transaction procedure in accordance with an embodiment;
Figure 2 is a schematic of a chargeback procedure in accordance with an embodiment;
Figure 3 is a mobile user interface for an issuer portal, showing recent transactions, in accordance with an embodiment;
Figure 4 is a mobile user interface for an issuer portal, showing a transaction receipt, in accordance with an embodiment;
Figure 5 is a mobile user interface for an issuer portal, showing a chargeback form, in accordance with an embodiment;
Figure 6 is a mobile user interface for an issuer portal, showing a chargeback confirmation form, in accordance with an embodiment; and
Figure 7 is a schematic of a four party payment system.

Embodiments of the present disclosure are described more fully hereinafter with reference to the accompanying drawings, in which some, but not all, embodiments of the present disclosure are shown. Indeed, the present disclosure can be embodied in many different forms and should not be construed as limited to the embodiments set forth herein. Rather, these embodiments are provided so that this disclosure clearly satisfies applicable legal requirements. Like numbers refer to like elements throughout.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when stated that something is "based on" something else, it can be based on one or more other things as well. In other words, unless expressly indicated otherwise, as used herein "based on" means "based at least in part on" or "based at least partially on."

As used herein, "entity" or "entities" includes one or more persons, organizations, businesses, institutions and/or other entities such as financial institutions, services providers, and the like that implement one or more portions of one or more of the embodiments described and/or contemplated herein. In particular, entities include a person, business, school, club, an organization having members in a particular trade or profession, sales representative for particular products, charity, not-for-profit organization, labour union, local government, government agency, or political party.

As used herein, "merchant" means a business, company, employer, seller, vendor, supplier, representative of the merchant including, but not limited to, sales persons, agents, clerks, employees, managers, officers, suppliers, contractors, and the like. A merchant can be any person or company engaged in the purchase and/or sale of goods and/or services.

As used herein, "transaction" means any interaction between a business and its customers, vendors, suppliers and others with whom they do business, typically a point of sale for the purpose of selling and buying products and/or services. The businesses can include, for example, retailers, entertainment and toy companies, restaurants, and the like. The products and services can include, for example, family fun, sports, restaurants, events, groceries, apparel, beverages, beauty products, books and magazines, foods, health care, household, furniture, office, personal care, pet care, photography, and the like.

As used herein, "customer" means a buyer, purchaser, or the recipient of a product, service or good from a merchant, seller, vendor or supplier, typically for monetary or other valuable consideration. As used herein, "card holder" means a person or entity that possesses a payment card (e.g., credit card and/or debit card from a payment card company such as MasterCard®, VISA® or American Express®).

The steps and/or actions of a method described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to the processor, so that the processor can read information from, and write information to, the storage medium. In the alternative, the storage medium can be integral to the processor. Further, in some embodiments, the processor and the storage medium reside in an Application Specific Integrated Circuit (ASIC). In the alternative, the processor and the storage medium can reside as discrete components in a computing device. Additionally, in some embodiments, the events and/or actions of a method can reside as one or any combination or set of codes and/or instructions on a machine-readable medium and/or computer-readable medium, which can be incorporated into a computer program product.

In one or more embodiments, the functions described can be implemented in hardware, software, firmware, or any combination thereof. If implemented in software, the functions can be stored or transmitted as one or more instructions or code on a computer-readable medium. Computer-readable media includes both computer storage media and communication media including any medium that facilitates transfer of a computer program from one place to another. A storage medium can be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures, and that can be accessed by a computer. Also, any connection can be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. "Disk" and "disc", as used herein, include compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

Computer program code for carrying out operations of embodiments of the present disclosure can be written in an object oriented, scripted or unscripted programming language such as Java, Perl, Smalltalk, C++, or the like. However, the computer program code for carrying out operations of embodiments of the present disclosure can also be written in conventional procedural programming languages, such as the "C" programming language or similar programming languages.

Embodiments of the present disclosure are described herein with reference to flowchart illustrations and/or block diagrams of methods, apparatus (systems), and computer program products. It should be understood that each block of the flowchart illustrations and/or block diagrams, and/or combinations of blocks in the flowchart illustrations and/or block diagrams, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create mechanisms for implementing the functions/acts specified in the flowchart and/or block diagram block or blocks.

These computer program instructions can also be stored in a computer-readable memory that can direct a computer or other programmable data processing apparatus to function in a particular manner so that the instructions stored in the computer readable memory produce an article of manufacture including instruction means that implement the function/act specified in the flowchart and/or block diagram block(s). The computer program instructions can be loaded onto a computer or other programmable data processing apparatus to cause a series of operational steps to be performed on the computer or other programmable apparatus to produce a computer-implemented process so that the instructions that execute on the computer or other programmable apparatus provide steps for implementing the functions/acts specified in the flowchart and/or block diagram block(s).

Most modern day monetary transactions are processed through payment processing networks. For example, MasterCard Worldwide Network is an example payment processing network. The MasterCard Worldwide Network is one of the world's largest global telecommunications networks linking all MasterCard members and MasterCard data processing centres into a single financial network. The MasterCard Worldwide Network routes payment transactions between the Master Card members from almost anywhere in the world and facilitates their authorization, clearing, and settlement.

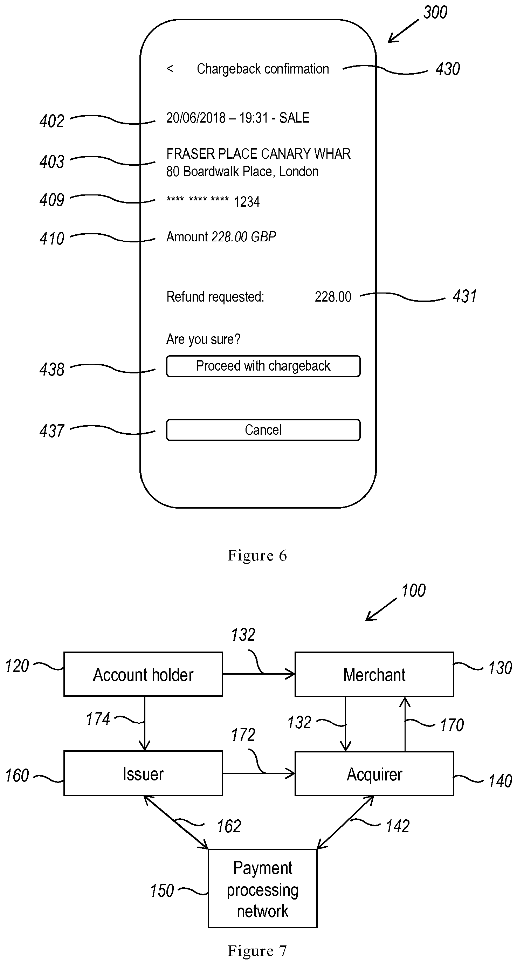

Referring to the drawings and, in particular, Figure 7, there is shown a four party payment (credit, debit or other) card system generally represented by reference numeral 100. In card system 100, account/card holder 120 submits the payment card to the merchant 130. The merchant's POS terminal communicates 132 with his acquiring bank or acquirer 140, which acts as a payment processor. The acquirer 140 initiates, at 142, the transaction on the payment card company network 150. The payment card company network 150 routes, via 162, the transaction to the issuing bank or card issuer 160, which is identified using information in the transaction message. The card issuer 160 approves or denies an authorization request, and then routes, via the payment card company network 150, an authorization response back to the acquirer 140. The acquirer 140 sends approval to the POS device of the merchant 130 (which may be a point of sale processor accessed via a network communication channel, or a point of sale terminal accessed physically). Thereafter, seconds later, the card holder completes the purchase and receives a receipt. The account of the merchant 130 is credited, via 170, by the acquirer 140. The card issuer 160 pays, via 172, the acquirer 140. Eventually, the card holder 120 pays, via 174, the card issuer 160.

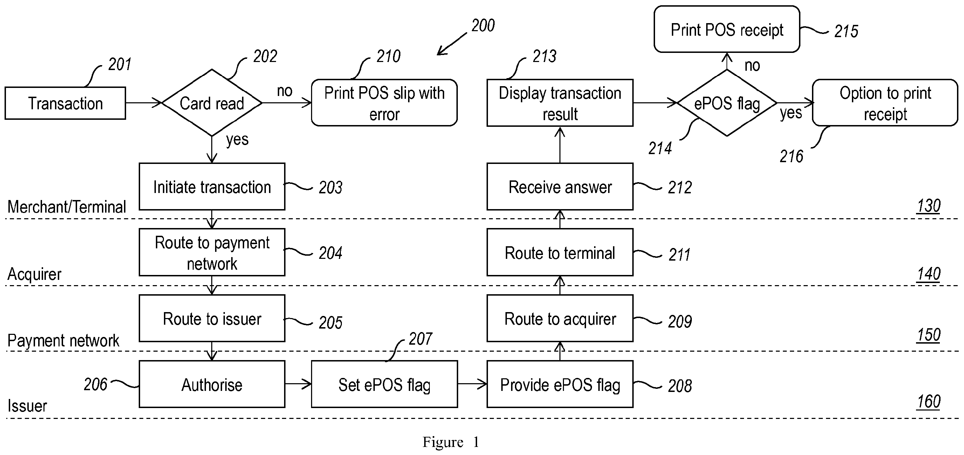

Figure 1 shows a computer implemented transaction process 200 in which the issuer 160 takes responsibility for providing a receipt to an account holder for a transaction through a payment network 150, rather than the merchant 130.

The process 200 starts with the card (or account) holder initiating a transaction 201, in which they wish to transfer funds from their account with the issuer 160 to a merchant account at the acquirer 140, in exchange for goods or services obtained from the merchant 130. The initiating of the transaction 201 may comprise the card holder presenting a payment device (such as a card or NFC enabled mobile device) to a merchant terminal. At step 202, the payment device (typically, but not limited to, a card) is read to identify the card holder account. Alternatively, the card holder may provide credentials identifying their account via a network communication chanel to a payment processing device (for example, providing at least one of a credit card number, expiry date, security number etc). In some embodiments, a token may be stored on the payment device(e.g. as in Apple pay), rather than the actual account number, or a pointer to a network/cloud stored token or account number may be provided (e.g. as in Android pay). The user may be required to provide authentication at step 202, for example by entering a PIN number at the terminal, or by providing some other authentication (e.g. a password associated with the account, or a one time authentication password provided by SMS)..

If the card reading step 202 (or more generally, account authentication) is not successful (for example, if the card cannot be read, or a correct PIN is not provided by the card holder), the POS terminal will print a POS slip with an error at step 210, and the transaction will not be initiated. In the case of a payment processor, the account holder may receive a communication indicating that the transaction has not been completed.

If the account is authentication and/or the card is read properly (and any necessary authentication provided by the card holder), the POS terminal/processor will initiate the transaction 203 by communicating the transaction information to the acquirer 130. At step 204 the acquirer 140 routes the transaction to the payment network 150 (for example the Mastercard worldwide network or similar). At step 205 the payment network 150 routes the transaction to the issuer 160,which will authorise the transaction at step 206 (assuming that the card holder has available funds in their account to pay for the transaction).

At the issuer 160, the information that is required for the POS card receipt (or for an electronic receipt, in the case of a payment made in an ecommerce context) may be present. More specifically, the issuer 160 may have the information that would be provided on a card receipt, which may include at least one of: the primary account number (PAN), the card acceptor, terminal ID, CHIP data, card sequence number, cardholder transaction type, amount and currency, time and data and authorisationIDresponse.

After the issuer 160 authorises payment to the merchant account at the acquirer 140, an ePOS enable flag is set at step 207. This can either be set to "yes" or "no", with "yes" meaning that the card holder account at the issuer 160 allows replacement of other receipting with electronic receipting in accordance with an embodiment (at the issuer), and "no" meaning that the card holder account at the issuer 160 does not allow replacement of other receipting with electronic receipting in accordance with an embodiment. If the ePOS enable flag is set to "yes", the issuer 160 will retain the transaction information necessary for a POS receipt (e.g. on a server), so that the card holder can access this.

In some embodiments, the issuer 160 may delegate responsibility for retaining the transaction information necessary for a POS receipt to the payment network 150, which may retain the information in response to receipt of an ePOS enable flag = "yes" from the issuer 160.

Whether the POS receipt information is electronically retained by the issuer 160 or the payment network 150, the POS receipts for the card holder will be made available to the cardholder, for example via a banking portal, which may be provided by the issuer 160. A banking portal may be provided via an application (e.g. for a mobile computing device or other computer) or by a web based portal.

The ePOS flag is provided, with information indicating whether the transfer of funds from the card holder's account at the issuer to the merchant's account at the acquirer has been authorised by the issuer, back to the merchant/terminal/processor 130 via steps 208, 209, 211, 212 (from the issuer 160 the to the payment network 150, from the payment network 150 to the acquirer 140, and from the acquirer 140 to the merchant/terminal/processor 130).

At the POS terminal/processor, the transaction result is displayed, in step 213. For example, if the issuer 160 has authorised the payment, the POS terminal/processor will indicate that the payment was successful.

In step 214, the POS terminal/processor is configured to check the ePOS enable flag to determine whether it is necessary to provide a receipt, or whether the receipt information has already been recorded by the issuer 160 or the payment network 150 (on behalf of the card holder). If the ePOS enable flag is "yes", the POS terminal/processor is not required to provide a POS receipt, and may provide the card holder with the option of a receipt at step 216.

If the ePOS enable flag is "no", the merchant terminal/processor may provide the card holder with a receipt in the normal way at step 215. For a terminal, the receipt may typically be printed. For a point of sale processor, the receipt would typically be provided electronically by the merchant (e.g. by email).

This approach shifts the responsibility for providing receipts from the merchant to the issuer. For some merchants, the burden of investing in and providing a secure electronic receipting system may be problematic. Allowing the issuer to take responsibility enables significant economies of scale, and leverages the enhanced security that is already provided by issuer banking portals. Issuer banking portals typically employ far more stringent user authentication than will typically be provided by merchants. For example, a typical merchant electronic receipting system may be to email a receipt to the user, which is likely to be less secure that using an issuer banking portal. Issuer banking portals typically employ multi-factor authentication (e.g. employing time-based one-time passwords) and appropriate encryption. For email, the security is far less certain: the merchant is likely to have very little idea of what security arrangements may be in place for the user's email account.

The transfer of responsibility for providing secure receipting to the issuer will tend to increase the uptake of electronic receipting, since the card holder is not required to trust the merchant to deliver the electronic receipt. For example, in order for a merchant to deliver an electronic receipt by email, the card holder must provide their email address. The card holder may not want to do this, since they may consider it likely that they will receive unwanted marketing emails from the merchant. They may also be concerned about the potential for a security breach at the merchant, which may enable a malicious third party to obtain their email address (e.g. opening them up to phishing attacks that purport to be from the merchant). From a card holder point of view, it may be preferable that electronic receipts are generated and stored by a party that is already trusted, and which has sufficient scale (and regulatory oversight) to provide appropriate security (e.g. the issuer or the payment network).

Methods according to an embodiment may reduce the number of printed receipts that are produced by preventing automatic receipt printing. Furthermore, the card holder will have no reason to want printed receipts, because their electronic point of sale receipts will be securely and conveniently accessible via a user interface provided by the issuer.

A further advantage of an electronic receipting system in accordance with an embodiment is that improved security for chargeback is provided. In certain embodiments, the card holder no longer needs to find the POS receipt from the merchant, and then provide this information to the issuer to initiate a chargeback. In embodiments, the issuer already has the POS receipt and all the information that is needed to initiate a chargeback. The card holder merely needs to select the transaction for which a chargeback is to be initiated, and provide the reason for the chargeback.

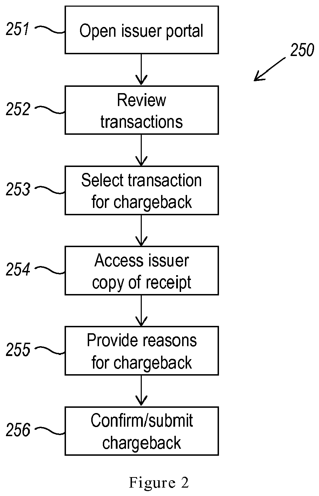

This procedure is illustrated in Figure 2, which shows an example method 250 for submitting a chargeback request.

At step 251, the card holder opens an issuer portal, which is a user interface provided by the issuer for reviewing card holder accounts and transactions (e.g. a banking app, or online banking website). In order to access the issuer portal, the card holder will be required to authenticate themselves, typically using multi-factor authentication. For example, a user may be required to provide a username and password, and then to provide a time based one-time password generated by an authenticator (which may be an authentication app on a mobile device, or a specific device provided by the issuer). In other examples, a user may receive an SMS or other message to their mobile device, and provide this to gain access to the portal, or a digital certificate issued to the card holder may be used in the authentication procedure.

Once the user has opened the issuer portal, in step 252 the card holder reviews their transactions. Typically, transactions will be displayed in a chronological list, with each list item identifying the date, merchant and transaction amount. In certain embodiments, at each transaction an indicator may show whether an electronic point of sale receipt is held by the issuer for that transaction. The indicator may be selectable in order to view the electronic point of sale receipt, for example to obtain more information on the transaction.

In step 253, the card holder selects a transaction for chargeback, for example from the listed transactions.

In step 254, the card holder accesses a copy of an electronic POS receipt from the issuer for a transaction that the card holder wishes to chargeback, for example by selecting (e.g. clicking, touching) an indicator showing that an electronic POS receipt is available.

In step 255, the card holder provides reasons for the chargeback. Such reasons will generally relate to breach of contract, such as that the goods/services were not provided, were counterfeit, not as described etc.

In step 256, once the reasons have been provided, the card holder may be required to confirm the chargeback request. Once the chargeback is submitted, it may be reviewed by the issuer. The merchant may be offered the opportunity to provide evidence as to whether the goods/services were provided.

The process outlined with respect to Figure 2 may be contrasted with prior art chargeback requests, in which a card holder is required to manage their own POS receipts, and to produce the necessary transaction information to enable a card payment to be disputed.

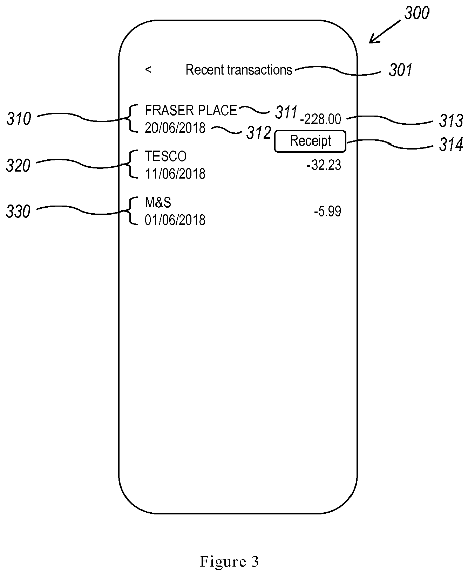

Figures 3 to 6 illustrate an example user interface for providing banking data, provided by an issuer, in accordance with an embodiment of the invention.

Figure 3 shows an example list of recent transactions for a card holder account. In this example the user interface is configured for display on a smartphone screen 300, but other arrangements are possible (for example, for display in a web browser), which may follow similar principles. A heading 301 indicates that recent transactions are displayed. The transactions 310, 320, 330 are listed in chronological order, with the most recent transaction listed at the top. Each transaction 310, 320, 330 in the list includes a merchant name 311, date 312 and amount 314. At least some of the transactions may have an electronic POS receipt stored by the issuer. In this example, only the first transaction 310 has a stored electronic POS receipt, which is indicated by the ePOS indicator 314.

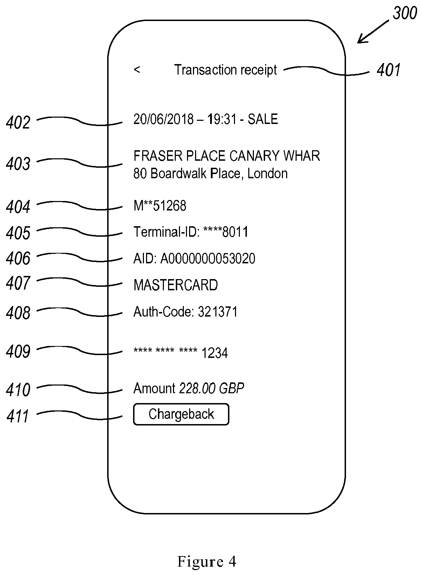

Selecting (e.g. touching) the ePOS indicator 314 may cause the user interface to display the electronic POS receipt for that transaction. An example of such an electronic POS receipt is shown in Figure 4. The heading 401 indicates that a transaction receipt is being displayed. The transaction receipt comprises: the date and time 402, the merchant or card acceptor 403 (optionally including at least an excerpt from the merchant address); a merchant or card acceptor code 404; a terminal ID 405; application identifier (or AID) 406; payment network 407; authorisation code 408, primary account number or card number 409 (in this case, with all but that last four digits obfuscated); the transaction amount 410 and a chargeback control 411.

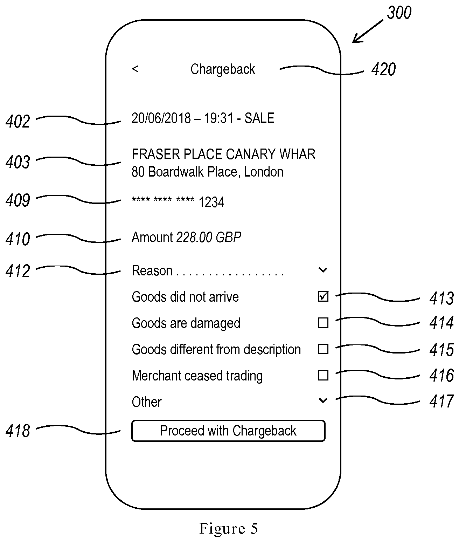

If the card holder wishes to initiate a chargeback for a transaction, they can select the chargeback control 411 (e.g. by tapping it). This will cause the user interface to display the chargeback interface, as shown in Figure 5.

Referring to Figure 5, the title 420 is "Chargeback". The chargeback interface may comprise a subset of the electronic POS receipt information. In this example, the chargeback interface comprises: transaction time/date 402; merchant or card acceptor 403; primary account number or card number 409; and the amount 410. In addition to this information, the chargeback interface comprises a list of user selectable options for requesting the chargeback, and a control 418 for proceeding with the chargeback. In this case, the list comprises: goods did not arrive 413, goods are damaged 414, goods different from description 415; merchant ceases trading 416 and other 417. In Figure 5 the user has selected the "goods did not arrive" 413. If the user selected "other", they will be presented with a space in which to input a reason. In some embodiments the user may also be provided with an option to provide supplemental information (not shown).

On selecting the control 418 for proceeding with the chargeback, a chargeback confirmation screen may be displayed (although this is not essential), as exemplified in Figure 6. The title 430 here is "Chargeback confirmation", and the same subset of the electronic receipt information may be shown that was displayed on the chargeback interface.

The chargeback confirmation screen further includes an amount of the refund requested 431. The card holder may adjust the amount of refund request (for example, in the case of some goods being delivered while others are omitted). The chargeback confirmation further comprises a control 438 for proceeding with the chargeback, and a control 437 for cancelling the chargeback request. The cancellation control 437 is positioned in the same location as the control 418 for proceeding from the chargeback interface, to avoid inadvertent selecting of the control for proceeding 418 and subsequent confirmation (which might occur if these controls were co-located). If the cancel control 437 is selected, the user may be taken back to the chargeback screen, or back to the list of transactions.

If the control 438 is selected, the chargeback is initiated, and the electronic POS receipt and any other information provided by the user with the chargeback request (e.g. the reason for the chargeback) are provided for processing to the issuer.

Although example embodiments have been described, it will be appreciated that other variations are possible, within the scope of the invention, which should be determined with reference to the appended claims.

## Claims

1. A computer implemented method of providing a transaction receipt, comprising, at an issuer:
receiving a transaction request from a card holder originating from a merchant payment terminal;
authorising the transaction;
setting an ePOS enable flag that indicates whether electronic POS receipting is enabled for the card holder's account at the issuer;
storing an electronic POS receipt at the issuer if the ePOS enable flag indicates that ePOS is enabled; and
communicating the authorised transaction with the ePOS enable flag to a payment network for routing to the payment terminal.

2. The computer implemented method of claim 1, further comprising, at a point of sale terminal of a merchant:
receiving an authorised transaction with an ePOS enable flag;
determining whether the ePOS enable flag indicates that electronic receipting is enabled, or is not enabled;
in response to determining that the ePOS enable flag indicates that electronic POS receipting is not enabled,
providing a POS receipt,
or, in response to determining that the ePOS enable flag indicates that electronic POS receipting is enabled,
providing an option not to receive a receipt from the merchant and/or not providing a POS receipt at the merchant.

3. The method of any preceding claim, further comprising:
providing a user interface for the card holder to obtain electronic POS receipts from the issuer for their transactions.

4. The method of claim 3, wherein the user interface comprises a control for selecting an electronic POS receipt and initiating a chargeback therefrom.

5. The method of clam 4, wherein the user interface comprises an application for a mobile device or a web interface.

6. The method of claim 4 or 5, wherein the user interface requires the card holder to authenticate themselves using multi-factor authentication.

7. The method of claim 6, wherein authentication using multi-factor authentication comprises providing a time based one time password.

8. A computer implemented method of operating a point of sale device, comprising, at the point of sale device:
receiving from an issuer an authorised transaction with an ePOS enable flag from an issuer;
determining whether the ePOS enable flag indicates that electronic receipting is enabled, or is not enabled;
in response to determining that the ePOS enable flag indicates that electronic POS receipting is not enabled,
providing a POS receipt,
or, in response to determining that the ePOS enable flag indicates that electronic POS receipting is enabled,
providing an option not to receive a receipt from the merchant and/or not providing a POS receipt.

9. A computer implemented method of securely initiating a chargeback, comprising;
obtaining an electronic point of sale receipt for a transaction from an issuer;
generating a chargeback request for the transaction from the issuer using the electronic point of sale receipt;
wherein the chargeback request is automatically populated with data by the issuer using data from the electronic point of sale receipt.

10. The method of claim 9, wherein obtaining the electronic point of sale receipt comprises reviewing a list of transactions via a user interface provided by the issuer, and selecting a transaction from the list.

11. The method of claim 9 or 10, further comprising providing reasons for the chargeback to the issuer

12. An electronic point of sale device for electronic transfer of funds from a card holder account at an issuer to a merchant account at an acquirer via a payment network, wherein the electronic point of sale device is configured to:
receive an authorised transaction with an ePOS enable flag;
determining whether the ePOS enable flag indicates that electronic receipting is enabled, or is not enabled;
in response to determining that the ePOS enable flag indicates that electronic POS receipting is not enabled,
providing a POS receipt,
or, in response to determining that the ePOS enable flag indicates that electronic POS receipting is enabled,
providing an option not to receive a receipt from the merchant and/or not providing a POS receipt at the merchant.

13. The electronic point of sale terminal of claim 12, further comprising a card reader for reading an electronic payment card that identifies the card holder account.

14. The electronic point of sale terminal of claim 12 or 13, comprising a near field communication reader for reading an electronic payment device that identified the card holder account.

15. A computing system configured to:
receive a transaction request from a card holder originating from a merchant payment device;
authorise the transaction;
set an ePOS enable flag that indicates whether electronic POS receipting is enabled for the card holder's account at the issuer;
store an electronic POS receipt at the issuer if the ePOS enable flag indicates that ePOS is enabled; and
communicate the authorised transaction with the ePOS enable flag to a payment network for routing to the payment terminal.
